# EUROPEAN PATENT APPLICATION

(11) **EP 3 360 722 A1**
(43) Date of publication of application: **15.08.2018**
(21) Application number: 18156178.8
(22) Date of filing: 09.02.2018
(51) Int. Cl.: B60L 11/18, B60K 1/00

(54) **SYSTEM FOR PREDICTING THE REMAINING AUTONOMY OF AN ELECTRIC VEHICLE**

(30) Priority: 10.02.2017 IT 201700014889
(71) Applicant: IVECO FRANCE S.A.S., 69200 Vénissieux (FR)
(72) Inventor: CODRON, Stephane, 69008 Lyon (FR)
(74) Representative: Bongiovanni, Simone

(57) **Abstract**

An electric road vehicle (1) for the public transport of passengers comprising a plurality of doors (3) of the vehicle (1) through which passengers may enter or exit the vehicle (1), comprising a system for predicting the remaining autonomy of the vehicle (1). This system essentially comprises a camera (5) placed in proximity to each of the doors (3) and an electronic unit configured to process the images captured by the cameras (5) to estimate the predicted autonomy of the vehicle (1).

## Description

### PRIORITY CLAIM

This application claims priority from Italian Patent Application No. 102017000014889 filed on February 10, 2017.

The present invention relates to a system for predicting the remaining autonomy of a vehicle, particularly for a system for predicting the remaining autonomy of a fully electric vehicle.

Public passenger transport vehicles are increasingly fully electric vehicles.

These electric vehicles comprise batteries configured in a known way to allow the operation of the vehicle.

However, the charge level of the batteries depends on several variables. For example, the number of passengers, traffic or weather conditions can influence the vehicle's consumption and therefore the charge of the batteries.

It may thus occur that a vehicle finds its batteries unexpectedly discharged, making it impossible for the vehicle to complete its journey.

It is therefore always necessary to have, in a simple and cost-effective way, an accurate estimate of the remaining autonomy of a fully electric vehicle.

The objects of this invention are to resolve the above-mentioned problems.

The above-mentioned objects are achieved by a system for predicting the remaining autonomy of a vehicle according to claim 1 and by a method according to claim 5.

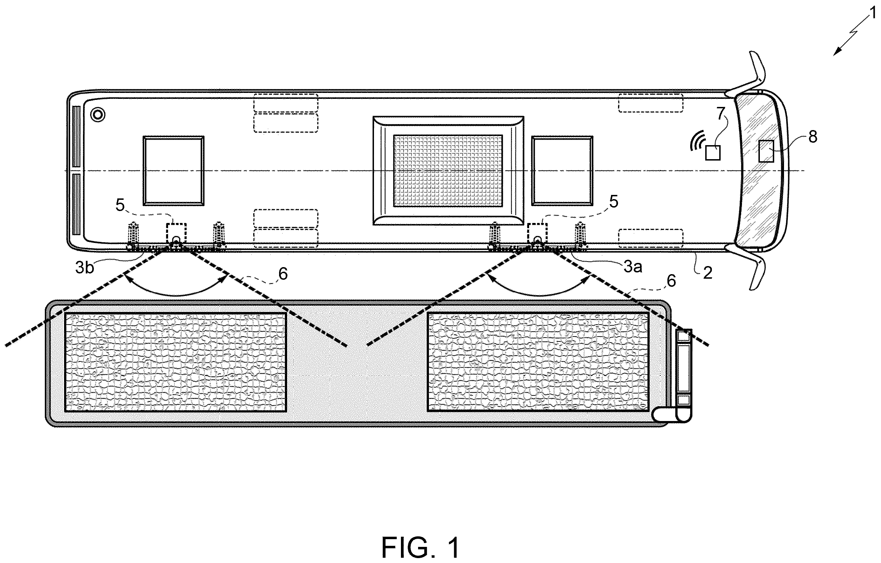

Other characteristics and advantages of the invention will become apparent from the following non-limiting description, provided for illustrative purposes, with reference to the attached drawing, Figure 1, which is a schematic view of a system for predicting the remaining autonomy of an electric vehicle.

Figure 1 illustrates a bus 1 of known type comprising, on at least one of its side walls 2, at least one door 3. In the case described the vehicle 1 comprises two doors, a front door 3a and a rear door 3b.

The bus 1 comprises a system for predicting the remaining autonomy of a vehicle 1 essentially comprising a camera 5 placed in proximity to each of the doors 3 and configured to acquire a visual area 6 in proximity to each of the doors 3 and an electronic unit (not shown) configured to process the images acquired by the cameras 5 in order to estimate the remaining autonomy of the bus 1.

The electronic unit is configured to comprise processing means for calculating from the images acquired by the cameras 5 the number of passengers who enter/exit the vehicle 1 and for updating the number of passengers aboard the vehicle 1 at each stop as well as storage means to store this latter number.

The system for predicting the remaining autonomy of a vehicle 1 also comprises means of GPS localisation 7 of the vehicle 1 configured to locate the vehicle 1 in relation to a predefined route of the said vehicle.

Finally, the vehicle 1 comprises display means 8 configured to display the images from the cameras 5, the number of passengers aboard the vehicle 1, the position of the latter with respect to its predefined route, and the remaining autonomy of the vehicle 1.

In a known way, the electronic unit may be integrated into the vehicle's ECU (Electronic Control Unit).

The system for predicting the remaining autonomy of an electric vehicle is achieved according to the following method.

The electronic unit is configured to process a method of predicting the remaining autonomy of the vehicle 1, comprising the following steps:
- acquiring the number of passengers aboard the vehicle 1 by processing the images captured from the cameras 5;
- calculating the average weight of the passengers aboard the vehicle, their number being known, by using an average passenger weight value stored in the storage means of the electronic unit;
- acquiring the GPS localisation of the vehicle 1 and processing the remaining route;
- calculating the predicted autonomy of the vehicle 1 as a function of the average weight of the passengers aboard the vehicle 1.

The driver of the vehicle 1 can view the results of the estimate on the viewing means 8 and decide whether it is necessary to recharge the batteries of the vehicle 1 in order to complete its journey.

From the foregoing, the benefits of system for predicting the remaining autonomy of an electric vehicle 1 according to the present invention are apparent.

The prediction system makes it possible to have a precise and realistic estimate of the remaining autonomy of vehicle 1 as a function of the weight actually transported by the vehicle 1.

The prediction system is simple, cost-effective and can be integrated with other electronic control systems of the vehicle 1.

Finally, it is apparent that the prediction system for the remaining autonomy of an electric vehicle 1 according to the present invention may be subject to modifications and variations without thereby departing from the protective scope of the claims.

## Claims

1. An electric road vehicle (1) for the public transport of passengers comprising a plurality of doors (3) of said vehicle (1) through which passengers may enter or exit the vehicle, **characterised in that** it comprises a system for predicting the remaining autonomy of said vehicle (1), said system essentially comprising a camera (5) placed in proximity to each of said doors (3) and an electronic unit configured to process the images captured by said cameras (5) to estimate the predicted autonomy of the vehicle (1) and **in that** said electronic unit is configured to comprise processing means to calculate the number of passengers who enter/exit the vehicle (1) on the basis of said images, and to update the number of passengers aboard the vehicle (1) at each stop as well as storage means to store this latter number.

2. The vehicle according to claim 1, **characterised in that** it comprises GPS localisation means (7) configured to localise said vehicle (1) with respect to a predefined route of the said vehicle.

3. The vehicle according to any of the previous claims, **characterised in that** it comprises display means (8) configured to display said images from the cameras (5), said number of passengers aboard the vehicle (1), said position of the vehicle (1) with respect to its predefined route and said predicted autonomy of the vehicle.

4. The vehicle according to any of the previous claims, **characterised in that** said electronic unit is the ECU of said vehicle (1).

5. A method for predicting the remaining autonomy of the batteries of an electric road vehicle (1) for the public transport of passengers according to one of the previous claims, **characterised in that** it comprises the following steps:
• acquiring the number of passengers aboard the vehicle (1) by processing the images captured from said cameras (5);
• calculating the average weight of the passengers aboard the vehicle, their number being known, by using an average passenger weight value stored in said electronic unit;
• acquiring the GPS localisation of the vehicle (1) and processing the remaining route;
• calculating the predicted autonomy of the vehicle (1) as a function of the average weight of the passengers aboard the vehicle (1).
